**Europäisches Patentamt**

**European Patent Office**

**Office européen des brevets**

(11) Veröffentlichungsnummer: **0 457 393 A2**

## (12) EUROPÄISCHE PATENTANMELDUNG

(21) Anmeldenummer: **91201095.6**

(22) Anmeldetag: **07.05.91**

(51) Int. Cl.5: **H04N 5/44**

(30) Priorität: **14.05.90 DE 4015437**

(43) Veröffentlichungstag der Anmeldung:
**21.11.91 Patentblatt 91/47**

(84) Benannte Vertragsstaaten:
**DE FR GB**

(71) Anmelder: **Philips Patentverwaltung GmbH
Wendenstrasse 35 Postfach 10 51 49
W-2000 Hamburg 1(DE)**

(84) **DE**

Anmelder: **N.V. Philips' Gloeilampenfabrieken
Groenewoudseweg 1
NL-5621 BA Eindhoven(NL)**

(84) **FR GB**

(72) Erfinder: **Hentschel, Christian
Katharinenstrasse 5
W-3300 Braunschweig(DE)**

(74) Vertreter: **Peters, Carl Heinrich, Dipl.-Ing. et al
Philips Patentverwaltung GmbH
Wendenstrasse 35 Postfach 10 51 49
W-2000 Hamburg 1(DE)**

(54) **Schaltungsanordnung zum Verringern des Zeilen- und Kantenflimmerns bei Fernsehbildern und Signalverarbeitungsschaltung hierzu.**

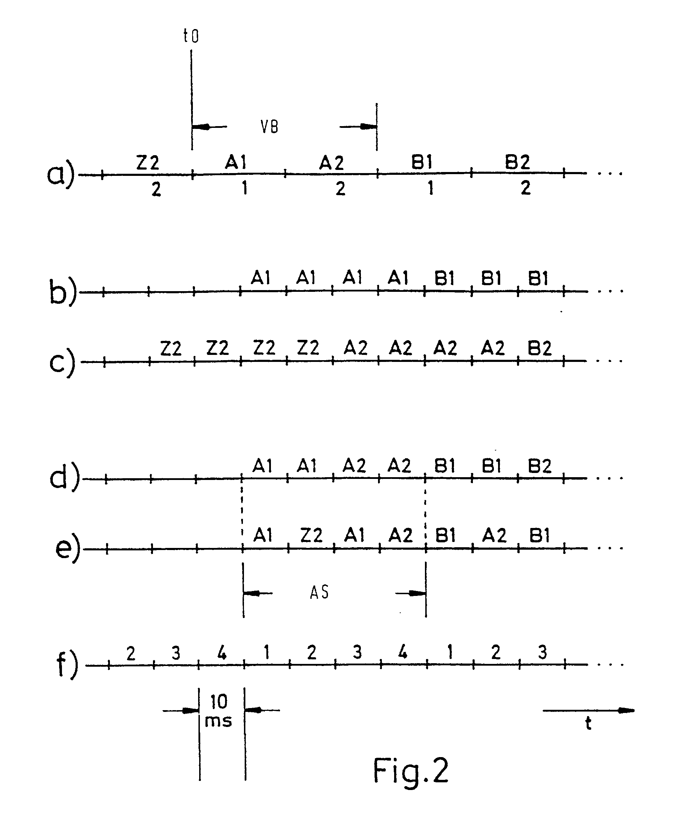

(57) Dargestellt wird eine Signalverarbeitungsschaltung für eine Schaltungsanordnung zum Verringern des Zeilen- und Kantenflimmerns bei Fernsehbildern, die als Folge von in Teilbildern (Z2, A1, A2, B1, B2) zusammengefaßten Abtastwerten eines Leuchtdichte- und eines Farbsignals im Zeilensprungverfahren zugeführt werden, mit
- je einem Teilbildspeicher (1, 2) für jedes Teilbild (A1, B1, bzw. Z2, A2, B2) des Leuchtdichtesignals zum Speichern desselben und einem Farbsignalspeicher (5) zum Speichern jeweils eines Teilbildes des Farbsignals mit je einer ersten Teilbildwiederholungsfrequenz,
- einer Auslesevorrichtung (7) zum Zuführen der abgespeicherten Teilbilder des Leuchtdichtesignals an einen ersten Signalzweig (9) mit einer ersten Auslesesequenz und an einen zweiten Signalzweig (11) mit einer zweiten Auslesesequenz sowie der abgespeicherten Teilbilder des Farbsignals mit der ersten Auslesequenz an einen dritten Signalzweig (13),
- wobei die Auslesesequenzen eine zweite, gegenüber den zugeführten Fernsehbildern verdoppelte Teilbildwiederholungsfrequenz aufweisen,
- in der ersten Auslesesequenz (Fig. 2d) jedes Teilbild in der Reihenfolge des Zuführens der Teilbilder zweimal aneinander anschließend ausgelesen wird, das erste Auslesen beginnend in der Mitte der Dauer des zugeführten Teilbildes, und
- in der zweiten Auslesesequenz (Fig. 2e) synchron zur ersten Auslesesequenz nacheinander das erste Teilbild (A1) des aktuell zugeführten Fernsehbildes, das zweite Teilbild (Z2) des voraufgegangenen Fernsehbildes, das erste Teilbild (A1) des aktuell zugeführten Fernsehbildes und abschließend das zweite Teilbild (A2) des aktuell zugeführten Fernsehbildes ausgelesen wird.

Rank Xerox (UK) Business Services

EP 0 457 393 A2

Fig.1

Die Erfindung bezieht sich auf eine Signalverarbeitungsschaltung für eine Schaltungsanordnung zum Verringern des Zeilen- und Kantenflimmerns bei Fernsehbildern sowie auf eine solche Schaltungsanordnung.

Aus der DE-OS 37 40 782 ist ein Fernsehempfänger mit einer Einrichtung zur Unterdrückung von Flimmerstörungen im wiedergegebenen Fernsehbild bekannt, wobei die Vertikalfrequenz bei der Wiedergabe gegenüber der Vertikalfrequenz bei der Übertragung erhöht ist. Darin soll ein Umwandlung von übertragenen Videosignalen in wiederzugebende Videosignale mit erhöter Vertikalfrequenz in Abhängigkeit vom Vorliegen von im wesentlichen horizontal verlaufenden Kanten nach einem ersten oder nach einem zweiten Verfahren erfolgen. Das erste Verfahren soll die Wiedergabe von Bewegungen und das zweite Verfahren die Wiedergabe von horizontal verlaufenden Kanten bevorzugen. Die zu diesem Fernsehempfänger gegebene Schaltung umfaßt mindestens drei Teilbildspeicher, in die empfangene Videosignale teilbildweise zyklisch eingeschrieben werden. Über Multiplexerschaltungen werden diese Signale verschiedenen Signalverarbeitungsstufen, die u.a. Verzögerungsleitungen, vertikale Interpolatoren und Addierer enthalten, auf zwei Wegen einer Überblendschaltung zugeleitet. Diese wird von wenigstens einem vertikalen Kantendetektor, ggf. ergänzt durch einen über eine logische Verknüpfung oder einen Interpolator zugeschalteten Bewegungsdetektor, gesteuert. Das Ausgangssignal der Überblendschaltung einerseits und ein verzögertes Videosignal andererseits werden schließlich einem Zeilenkompressor zugeleitet, an dessen Ausgang das wiederzugebende Videosignal mit erhöter Vertikalfrequenz und erhöter Zeilenfrequenz abnehmbar ist.

Die bei der bekannten Schaltungsanordnung beschriebenen Signalverarbeitungsschritte und -stufen müssen sowohl für die Leuchtdichtesignale als auch für die Farbsignale der zu verarbeitenden Fernsehbilder zur Verfügung gestellt werden, so daß ein sehr umfangreicher Aufbau, insbesondere mit einem großen Bedarf an Teilbildspeichern, entsteht.

Die Erfindung hat die Aufgabe, eine Vereinfachung der bekannten Signalverarbeitung und Schaltung ohne merkliche Verringerung der Wiedergabequalität der Fernsehbilder zu erreichen.

Diese Aufgabe wird erfindungsgemäß gelöst durch eine Signalverarbeitungsschaltung für eine Schaltungsanordnung zum Verringern des Zeilen- und Kantenflimmerns bei Fernsehbildern, die als Folge von in Teilbildern zusammengefaßten Abtastwerten eines Leuchtdichte- und eines Farbsignals im Zeilensprungverfahren zugeführt werden, mit

- je einem Teilbildspeicher für jedes Teilbild des Leuchtdichtesignals zum Speichern desselben und einem Farbsignalspeicher zum Speichern jeweils eines Teilbildes des Farbsignals mit je einer ersten Teilbildwiederholungsfrequenz,

- einer Auslesevorrichtung zum Zuführen der abgespeicherten Teilbilder des Leuchtdichtesignals an einen ersten Signalzweig mit einer ersten Auslesesequenz und an einen zweiten Signalzweig mit einer zweiten Auslesesequenz sowie der abgespeicherten Teilbilder des Farbsignals mit der ersten Auslesesequenz an einen dritten Signalzweig,

- wobei die Auslesesequenzen eine zweite, gegenüber den zugeführten Fernsehbildern verdoppelte Teilbildwiederholungsfrequenz aufweisen,

- in der ersten Auslesesequenz jedes Teilbild in der Reihenfolge des Zuführens der Teilbilder zweimal aneinander anschließend ausgelesen wird, das erste Auslesen beginnend in der Mitte der Dauer des zugeführten Teilbildes, und

- in der zweiten Auslesesequenz synchron zur ersten Auslesesequenz nacheinander das erste Teilbild des aktuell zugeführten Fernsehbildes, das zweite Teilbild des voraufgegangenen Fernsehbildes, das erste Teilbild des aktuell zugeführten Fernsehbildes und abschließend das zweite Teilbild des aktuell zugeführten Fernsehbildes ausgelesen wird.

Die erfindungsgemäße Signalverarbeitungsschaltung nutzt die Erkenntnis, daß die für eine Wiedergabe von Kanten im Fernsehbild entscheidende Bildinformation mit dem Leuchtdichtesignal übertragen und dieses im Bildeindruck durch das Farbsignal unterlegt wird. Demzufolge wird eine Lösung geschaffen, die lediglich für das Leuchtdichtesignal einen Signalverarbeitungsschritt zum Verringern des Zeilen- und Kantenflimmerns vorsieht, während für das Farbsignal lediglich das Großflächenflimmern durch eine Verdopplung der Teilbildwiederholungsfrequenz unterdrückt wird, wie dies zusätzlich auch für das Leuchtdichtesignal durchgeführt wird. Dabei wird ein Teilbild mit einer bestimmten, durch die Teilbildwiederholungsfrequenz der zugeführten Fernsehbilder bestimmten Teilbilddauer in den Teilbildspeicher eingeschrieben. Diese Teilbilddauer beträgt z.B. beim PAL-Fernsehsignal 20 msec. Bereits nach der Hälfte dieser Teilbilddauer kann aber zum ersten Mal das abgespeicherte Teilbild aus dem Speicher ausgelesen werden. Dieses Auslesen erfolgt mit einer verdoppelten Teilbildwiederholungsfrequenz, im vorstehenden Beispiel somit innerhalb einer Teilbilddauer von 10 msec. Das Einschreiben und das erste Auslesen des Teilbildes enden dann zum selben Zeitpunkt, so daß die auszulesende Information des Teilbildes bereits oder gerade eben zuvor in den Teilbildspeicher eingeschrieben wurde. In der ersten Auslesesequenz wird anschließend dasselbe Teilbild noch einmal mit der verdoppelten Teilbildwiederholungsfrequenz ausgelesen, während bereits das nächste Teilbild in den Teilbildspeicher eingeschrieben wird. Dieses zweite Auslesen ist somit beendet, wenn das neue Teilbild gerade zur Hälfte in den Teilbildspeicher eingeschrieben ist. Das Auslesen eilt sozusagen dem Einschreiben voraus. Dadurch wird auch hier gewährleistet, daß trotz des ununterbrochenen Einschreibens von Teilbildern in den Teilbildspeicher auch für das zweite Auslesen noch die unveränderte Teilbildinformation zur Verfügung steht. Das nächste Auslesen des Teilbildspeichers mit der verdoppelten Teilbildwiederholungsfrequenz entspricht dann dem ersten Auslesen des ersten Teilbildes, lediglich mit dem Unterschied, daß nun die Information des zweiten Teilbildes gespeichert ist und ausgelesen wird. Auf diese Weise wird jedes Teilbild in der ersten Auslesesequenz in der Reihenfolge des Zuführens der Teilbilder zweimal aneinander anschließend ausgelesen. Dies unterdrückt das Großflächenflimmern und ergibt eine gute Bewegungswiedergabe.

Die erste Auslesesequenz wird im ersten Signalzweig für das Leuchtdichtesignal und im dritten Signalzweig für das Farbsignal durchgeführt. Im zweiten Signalzweig wird synchron zur ersten Auslesesequenz eine zweite Auslesesequenz für das Leuchtdichtesignal ausgeführt, d.h. auch die zweite Auslesesequenz beginnt in der Mitte der Dauer des zugeführten Teilbildes, also mit einer Verzögerung von lediglich einem halben Teilbild, bezogen auf die Teilbildwiederholungsfrequenz der zugeführten Fernsehbilder.

Insgesamt wird somit eine zeitrichtige Bereitstellung der Farbsignale einerseits und der Leuchtdichtesignale auf verschiedenen Signalverarbeitungszweigen nach verschiedenen Methoden zur Flimmerreduktion erreicht. Dies ist wichtig für einen Einsatz der erfindungsgemäßen Signalverarbeitungsschaltung in einer Schaltungsanordnung zum Verringern des Zeilen- und Kantenflimmerns, die mit einer Verknüpfungsanordnung zum Kombinieren der Signale aus dem ersten und zweiten Signalzweig zu einem wiederzugebenden Leuchtdichtesignal ausgestattet ist. Beim Kombinieren der Signale aus den Signalzweigen wird nur so eine zeitliche Verwürfelung der Signale und damit das Auftreten starker Störungen vermieden. Eine solche Schaltungsanordnung enthält bevorzugt weiterhin eine Detektionseinrichtung zum Detektieren von Kanten und/oder Bewegungen in den zugeführten Fernsehbildern und zum Steuern der Verknüpfungsanordnung nach Maßgabe detektierter Kanten und/oder Bewegungen.

Die Unteransprüche betreffen vorteilhafte Ausgestaltungen der erfindungsgemäßen Signalverarbeitungsschaltung für sich und in Verbindung mit einer Schaltungsanordnung zum Verringern des Zeilen- und Kantenflimmerns.

Die Zeichnung zeigt ein Ausführungsbeispiel der Erfindung, wobei

Fig. 1    ein Blockschaltbild einer Schaltungsanordnung mit einer erfindungsgemäßen Signalverarbeitungsschaltung zeigt und

Fig. 2    ein Diagramm zur Darstellung der Abfolge der Teilbilder wiedergibt.

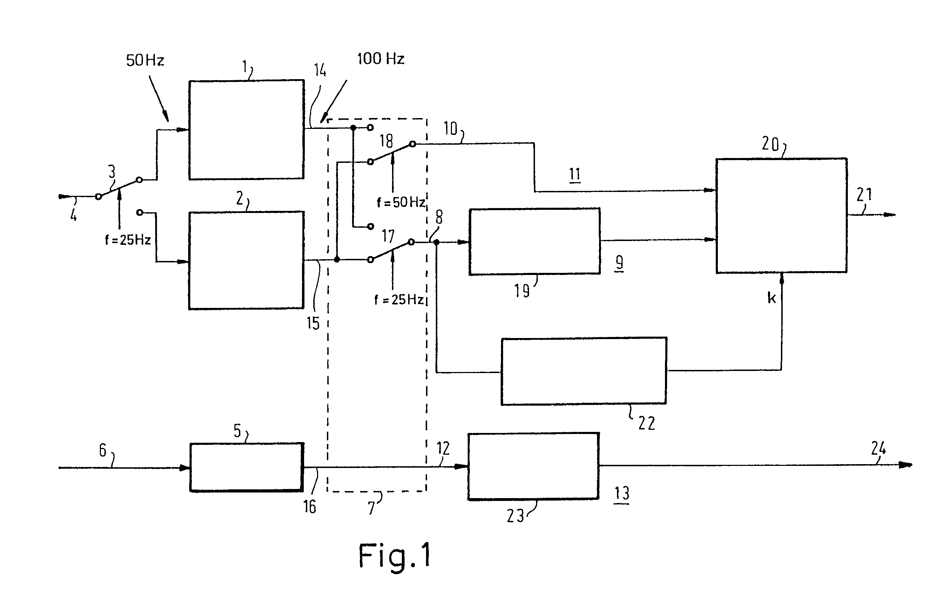

In Fig. 1 sind mit 1 und 2 zwei Teilbildspeicher für das Leuchtdichtesignal bezeichnet, in die wahlweise über einen Wahlschalter 3 von einer Leitung 4 in Teilbildern zusammengefaßte Abtastwerte eines Leuchtdichtesignals eingeschrieben werden, und zwar in den Teilbildspeicher 1 jeweils das erste von zwei Teilbildern eines Vollbildes und in den Teilbildspeicher 2 das jeweils zweite Teilbild. Entsprechend wird der Wahlschalter 3 mit einer Umschaltfrequenz betrieben, die der Wiederholungsfrequenz der Vollbilder entspricht. Im vorliegenden Beispiel beträgt die Teilbildwiederholungsfrequenz des im Zeilensprungverfahren zugeführten Leuchtdichtesignals 50 Hz, die Wiederholungsfrequenz der Vollbilder somit 25 Hz. Der Wahlschalter 3 deutet die wechselweise Steuerung der Teilbildspeicher 1, 2 an und wird in einer praktischen Ausführung bevorzugt durch eine entsprechende Steuerung der Eingänge der Teilbildspeicher 1, 2 verwirklicht.

Die Schaltungsanordnung nach Fig. 1 umfaßt weiterhin einen Teilbildspeicher 5, in dem die über eine Leitung 6 im Zeilensprungverfahren mit der ersten Teilbildwiederholungsfrequenz zugeführten Farbsignale fortlaufend abgespeichert werden. Im Gegensatz zu den Teilbildspeichern 1, 2 für das Leuchtdichtesignal wird im Teilbildspeicher 5 keine Trennung der Teilbilder vorgenommen.

Den Teilbildspeichern 1, 2, 5 ist eine Auslesevorrichtung 7 nachgeschaltet, die an einem ersten Ausgang 8 die abgespeicherten Teilbilder des Leuchtdichtesignals an einen ersten Signalzweig 9 mit einer ersten Auslesesequenz und über einen zweiten Ausgang 10 an einen zweiten Signalzweig 11 mit einer zweiten Auslesesequenz zuführt. Die im Teilbildspeicher 5 abgespeicherten Teilbilder des Farbsignals werden mit der ersten Auslesesequenz über einen dritten Ausgang 12 an einen dritten Signalzweig 13 geleitet. Dazu werden der Auslesevorrichtung 7 die jeweils ersten Teilbilder des Leuchtdichtesignals vom Teilbildspeicher 1 mit der verdoppelten Teilbildwiederholungsfrequenz über einen ersten Eingang 14, die jeweils zweiten Teilbilder des Leuchtdichtesignals entsprechend über einen zweiten Eingang 15 der Auslesevorrichtung 7 zugeleitet. Über einen dritten Eingang 16 gelangt das Farbsignal mit verdoppelter Teilbildwiederholungsfrequenz aus dem Teilbildspeicher 5 an die Auslesevorrichtung und von dort unverändert zum dritten Ausgang 12.

Die Teilbildspeicher 1, 2, 5 werden über eine nicht dargestellte Steuerschaltung derart gesteuert, daß das gerade eingeschriebene Teilbild des Leuchtdichtesignals bzw. des Farbsignals mit gegenüber den Signalen auf den Leitungen 4 bzw. 6 verdoppelter Teilbildwiederholungsfrequenz beginnend in der Mitte der Dauer des zugeführten Teilbildes ausgelesen wird, und zwar die Teilbilder des Farbsignals aus dem Teilbildspeicher 5 jeweils zweimal hintereinander, die Teilbildes des Leuchtdichtesignals aus den Teilbildspeichern 1 und 2 jeweils viermal hintereinander. Danach ist jeweils das Zeitintervall, in dem das gerade ausgelesene Teilbild am Ausgang 14, 15 bzw. 16 zur Verfügung steht, abgelaufen, und das gespeicherte Teilbild wird durch ein nachfolgendes, aktuelles Teilbild überschrieben.

Für das Farbsignal entspricht die vorstehende Reihenfolge der ersten Auslesesequenz, so daß das Farbsignal vom dritten Eingang 16 unverändert dem dritten Ausgang 12 der Auslesevorrichtung 7 zugeführt werden kann. Für das Leuchtdichtesignal aus den Teilbildspeichern 1, 2 umfaßt die Auslesevorrichtung zum ersten und zweiten Signalzweig 9, 11 je einen Umschalter 17 bzw. 18, die derart gesteuert werden, daß die Teilbilder des Leuchtdichtesignals an den ersten Signalzweig 9 mit der ersten Auslesesequenz und an den zweiten Signalzweig 11 mit der zweiten Auslesesequenz geleitet werden. Dazu weist der dem ersten Signalzweig 9 zugeordnete Umschalter 17 einen Schaltzyklus von der Dauer der Auslesesequenz und der dem zweiten Signalzweig 11 zugeordnete Umschalter 18 einen Schaltzyklus von der Dauer einer halben Auslesesequenz auf. Im vorliegenden Fall wird also der erste Umschalter 17 mit einer Umschaltfrequenz von 25 Hz,der zweite Umschalter 18 mit einer Umschaltfrequenz von 50 Hz betrieben. Die Schaltzyklen beginnen gleichzeitig mit den Auslesesequenzen derart, daß beide Signalzweige 9, 11 zu Beginn einer Auslesesequenz mit dem Teilbildspeicher 1 für das erste Teilbild verbunden sind.

In Fig. 2 ist in einem zeitlichen Schema die Abfolge der Teilbilder in der Schaltungsanordnung nach Fig. 1 skizziert. Fig. 2a) zeigt dabei die zeitliche Abfolge der Teilbilder des Leuchtdichtesignals auf der Leitung 4. Dabei ist A1 das erste und das A2 das zweite Teilbild eines Vollbildes VB, B1 und B2 sind die Teilbilder des nachfolgenden Vollbildes und 22 ist das zweite Teilbild des voraufgehenden Vollbildes. Diese werden mit der ersten Teilbildwiederholungsfrequenz und einer dementsprechenden Teilbilddauer von 20 msec im vorliegenden Beispiel auf der Leitung 4 zugeführt und über den Wahlschalter 3 in die Teilbildspeicher 1 bzw. 2 eingeschrieben. Fig. 2a) zeigt die Zeitintervalle des Einschreibens in Zuordnung zu den durch ihr Bezugszeichen angedeuteten Teilbildspeichern 1 bzw. 2 für die einzelnen Teilbilder des Leuchtdichtesignals. Das Einschreiben des ersten Teilbildes des Vollbildes VB beginnt zum Zeitpunkt t0 und endet nach 20 msec, darauf schließt sich das Einschreiben des zweiten Teilbildes A2 in den Teilbildspeicher 2 mit einer Teilbilddauer von ebenfalls 20 msec an. Nach 40 msec beginnt das Einschreiben des ersten Teilbildes B1 des nachfolgenden Vollbildes usw..

Fig. 2b) zeigt das erste Teilbild des Leuchtdichtesignals mit verdoppelter Teilbildwiederholungsfrequenz am ersten Eingang 14 der Auslesevorrichtung 7. Das erste Auslesen beginnt in der Mitte des Einschreibintervalls, also für das Teilbild a1 10 msec nach dem Zeitpunkt t0. Das erste Teilbild A1 des Vollbildes VB wird insgesamt viermal nacheinander aus dem ersten Teilbildspeicher 1 ausgelesen. Dann schließt sich das Auslesen des ersten Teilbildes des nachfolgenden Vollbildes - B1 - lückenlos an.

Entsprechend erfolgt das Auslesen des jeweils zweiten Teilbildes Z2, A2, B2, usw. aus dem Teilbildspeicher 2 über den zweiten Eingang 15 der Auslesevorrichtung 7, wie in Fig. 2c) dargestellt ist. Das zweite Teilbild A2 des Vollbildes VB tritt am Eingang 15 um eine Teilbildperiode der ersten Teilbildwiederholungsfrequenz verzögert gegenüber dem zugehörigen ersten Teilbild A1 auf; entsprechendes gilt für die Teilbilder der anderen Vollbilder.

Fig. 2d) zeigt das Signal am ersten Ausgang 8 der Auslesevorrichtung 7, d.h. das Leuchtdichtesignal mit der dem ersten Signalzweig 9 zugeführten Auslesesequenz. Darin ist jedes Teilbild in der Reihenfolge des Zuführens der Teilbilder auf der Leitung 4 zweimal aneinander anschließend ausgelesen, also in der Reihenfolge A1, A1, A2, A2, usw.. Dieselbe Auslesesequenz liegt auch am dritten Eingang 16 der Auslesevorrichtung 7 für das Farbsignal vor, so daß Fig. 2d) ebenfalls als Darstellung des in seiner Teilbildwiederholungsfrequenz verdoppelten Farbsignals dient. Dieses Signal erscheint unverändert am dritten Ausgang 12 der Auslesevorrichtung 7.

Die Auslesesequenzen an den Ausgängen 8, 10, 12 der Auslesevorrichtung 7 beginnen somit alle zum gleichen Zeitpunkt 10 msec nach dem Zeitpunkt t0. Dabei ist für das Farbsignal nur ein Teilbildspeicher 5 erforderlich.

Fig. 2e) zeigt das Leuchtdichtesignal in der zweiten Auslesesequenz am zweiten Ausgang 10 der Auslesevorrichtung 7, wie es durch den zweiten Umschalter 18, der mit einer Umschaltfrequenz von 50 Hz betrieben wird, aus den mit der doppelten Teilbildwiederholungsfrequenz aus den Teilbildspeichern 1 und 2 ausgelesenen Teilbildern zusammengesetzt wird. In dieser zweiten Auslesesequenz erscheint zuerst das erste Teilbild A1 des (aktuellen) Vollbildes VB, danach das zweite Teilbild 22 des voraufgegangenen Vollbildes, anschließend wird das erste Teilbild A1 des Vollbildes VB wiederholt, und zum Schluß wird aus dem Teilbildspeicher 2 das inzwischen darin eingeschriebene zweite Teilbild A2 des Vollbildes VB ausgelesen. Mit AS ist die Zeitdauer für eine Auslesesequenz bezeichnet, wie sie in den Fig. 2d) und e) dargestellt sind. Fig. 2f) gibt als Zuordnung zur Zeitachse t und zu den über ihr dargestellten Abfolgen von Teilbildern eine Durchnumerierung der Teilbilder der Auslesesequenzen mit der verdoppelten Teilbildwiederholungsfrequenz. Die einzelnen Teilbilder einer Auslesesequenz, z.B. auch der Auslesesequenz AS, sind mit arabischen Ziffern 1 bis 4 durchnumeriert.

In der Schaltungsanordnung nach Fig. 1 wird das Signal mit der zweiten Auslesesequenz im zweiten Signalzweig 11 für die Wiedergabe ruhender Bildinhalte zum Verringern des Zeilen- und Kantenflimmerns verwendet. Das Leuchtdichtesignal nach der ersten Auslesesequenz im ersten Signalzweig 9 dient der flimmerfreien Wiedergabe bewegter Bildinhalte. Wahlweise ist im ersten Signalzweig 9 ein vertikaler Interpolator 19 eingesetzt, der aus der Teilbildfolge gemäß Fig. 2d) durch vertikale Interpolation beispielsweise ein Leuchtdichtesignal mit der Auslesesequenz A1, A1i, A2i, A2 erzeugt. Dieser vertikale Interpolator 19 bildet als erste Interpolationseinrichtung eine vertikale Interpolation zwischen aufeinanderfolgenden Zeilen jeweils eines Teilbildes.

Die Signale vom ersten und zweiten Signalzweig 9 und 11 werden nach Maßgabe eines Überblendfaktors k in einer Verknüpfungsanordnung 20 kombiniert, vorzugsweise in Form einer Linearkombination. Dieses Signal wird am Ausgang 21 der Verknüpfungsanordnung 20 als Leuchtdichtesignal mit einer für bewegte und ruhende Bildinhalte gleichermaßen wirksamen Flimmerreduktion abgegeben. Zur Bestimmung des Überblendfaktors k ist eine Detektionseinrichtung 22 vorgesehen, die Kanten und/oder Bewegungen in den zugeführten Fernsehbildern detektiert. Diese Detektion kann wahlweise oder auch zugleich, d.h. parallel zueinander, erfolgen. Nach Maßgabe detektierter Kanten und/oder Bewegungen wird dann der Überblendfaktor k bestimmt.

Wahlweise umfaßt die Schaltungsanordnung nach Fig. 1 im dritten Signalzweig 13 eine zweite Interpolationseinrichtung 23, ebenfalls als vertikaler Interpolator ausgebildet, durch die eine vertikale Interpolation zwischen aufeinanderfolgenden Zeilen jeweils eines Teilbildes des Farbsignals gebildet wird. Damit kann eine Flimmerreduktion für den Fall bewegter Bildinhalte entsprechend der Verarbeitung im ersten Signalzweig 9 durchgeführt werden. Das bearbeitete Farbsignal wird an einem Ausgang 24 zur Verfügung gestellt.

Während somit für das Leuchtdichtesignal eine adaptive, d.h. der Unterscheidung zwischen ruhenden und bewegten Bildinhalten angepaßte, Verarbeitung vorgesehen ist, erfolgt die Verarbeitung des Farbsignals nicht adaptiv.

Zur weiteren Einsparung von Speicherplatz im Teilbildspeicher 5 für das Farbsignal kann dieses bevorzugt mit einer geringeren Abtastrate als das Leuchtdichtesignal gespeichert werden. Dies hat auf die Dauer und Abfolge der Auslesesequenzen keinen Einfluß, sondern bedeutet, daß mehreren, aufeinanderfolgenden Abtastwerten des Leuchtdichtesignals ein Abtastwert des Farbsignals zugeordnet wird.

Die beschriebene Schaltungsanordnung ist jedoch auch geeignet für die Wiedergabe mit verdoppelter Teilbildwiederholungsfrequenz und erhöhter Zeilenzahl der wiederzugebenden Fernsehbilder, beispielsweise in einem Wiedergabesystem mit verdoppelter Vertikalfrequenz und fortlaufendem Zeilenraster ohne Zeilensprung, d.h. in progressiver Darstellung.

Die erfindungsgemäße Signalverarbeitungsschaltung kann in einer Abwandlung der Fig. 1 auch mit Schaltungsanordnungen kombiniert werden, die zur Flimmerreduktion andere Filterverfahren einsetzen. Beispielsweise sind nichtlineare Filterungen wie die Medianfilterung denkbar.

**Patentansprüche**

1. Signalverarbeitungsschaltung für eine Schaltungsanordnung zum Verringern des Zeilen- und Kantenflimmerns bei Fernsehbildern, die als Folge von in Teilbildern (Z2, A1, A2, B1, B2) zusammengefaßten Abtastwerten eines Leuchtdichte- und eines Farbsignals im Zeilensprungverfahren zugeführt werden, mit
   - je einem Teilbildspeicher (1, 2) für jedes Teilbild (A1, B1 bzw. Z2, A2, B2) des Leuchtdichtesignals zum Speichern desselben und einem Farbsignalspeicher (5) zum Speichern jeweils eines Teilbildes des Farbsignals mit je einer ersten Teilbildwiederholungsfrequenz,
   - einer Auslesevorrichtung (7) zum Zuführen der abgespeicherten Teilbilder des Leuchtdichtesignals an einen ersten Signalzweig (9) mit einer ersten Auslesesequenz und an einen zweiten Signalzweig (11) mit einer zweiten Auslesesequenz sowie der abgespeicherten Teilbilder des Farbsignals mit der ersten Auslesesequenz an einen dritten Signalzweig (13),

- wobei die Auslesesequenzen eine zweite, gegenüber den zugeführten Fernsehbildern verdoppelte Teilbildwiederholungsfrequenz aufweisen,

- in der ersten Auslesesequenz (Fig. 2d) jedes Teilbild in der Reihenfolge des Zuführens der Teilbilder zweimal aneinander anschließend ausgelesen wird, das erste Auslesen beginnend in der Mitte der Dauer des zugeführten Teilbildes, und

- in der zweiten Auslesesequenz (Fig. 2e) synchron zur ersten Auslesesequenz nacheinander das erste Teilbild (A1) des aktuell zugeführten Fernsehbildes, das zweite (22) Teilbild des voraufgegangenen Fernsehbildes, das erste Teilbild (A1) des aktuell zugeführten Fernsehbildes und abschließend das zweite Teilbild (A2) des aktuell zugeführten Fernsehbildes ausgelesen wird.

2. Signalverarbeitungsschaltung nach Anspruch 1, dadurch gekennzeichnet, daß die Auslesevorrichtung (7) zum ersten (9) und zweiten (11) Signalzweig je einen Umschalter (17, 18) umfaßt.

3. Signalverarbeitungsschaltung nach Anspruch 2, dadurch gekennzeichnet, daß der dem ersten Signalzweig (9) zugeordnete Umschalter (17) einen Schaltzyklus von der Dauer einer Auslesesequenz und der dem zweiten Signalzweig (11) zugeordnete Umschalter (18) einen Schaltzyklus von der Dauer einer halben Auslesesequenz aufweist, daß die Schaltzyklen gleichzeitig mit den Auslesesequenzen beginnen und daß beide Signalzweige (9, 11) zu Beginn einer Auslesesequenz mit dem Teilbildspeicher (1) für das erste Teilbild verbunden sind.

4. Signalverarbeitungsschaltung nach Anspruch 1 bis 3, dadurch gekennzeichnet, daß das Farbsignal mit einer geringeren Abtastrate als das Leuchtdichtesignal gespeichert wird.

5. Schaltungsanordnung mit einer nach Anspruch 1, 2, 3 oder 4 ausgebildeten Signalverarbeitungsschaltung, einer Verknüpfungsanordnung (20) zum Kombinieren der Signale aus dem ersten (9) und zweiten (11) Signalzweig zu einem wiederzugebenden Leuchtdichtesignal und einer Detektionseinrichtung (22) zum Detektieren von Kanten und/oder Bewegungen in den zugeführten Fernsehbildern und zum Steuern der Verknüpfungsanordnung (20) nach Maßgabe detektierter Kanten und/oder Bewegungen.

6. Schaltungsanordnung nach Anspruch 5, gekennzeichnet durch eine erste Interpolationseinrichtung (19) im ersten Signalzweig (9) zum Bilden einer vertikalen Interpolation zwischen aufeinanderfolgenden Zeilen jeweils eines Teilbildes.

7. Schaltungsanordnung nach Anspruch 5 oder 6, gekennzeichnet durch eine zweite Interpolationseinrichtung (23) im dritten Signalzweig (13) zum Bilden einer vertikalen Interpolation zwischen aufeinanderfolgenden Zeilen jeweils eines Teilbildes.

Fig.1

Fig.2